(19) Europäisches Patentamt
European Patent Office
Office européen des brevets

(11) **EP 3 935 467 B1**

(12) **EUROPEAN PATENT SPECIFICATION**

(45) Date of publication and mention
of the grant of the patent:
**30.11.2022  Bulletin 2022/48**

(21) Application number: **20708492.2**

(22) Date of filing: **04.03.2020**

(51) International Patent Classification (IPC):
**G05D 9/12** *(2006.01)*        **G01F 23/24** *(2006.01)*

(52) Cooperative Patent Classification (CPC):
**G05D 9/12; G01F 23/241**

(86) International application number:
**PCT/EP2020/055675**

(87) International publication number:
**WO 2020/178326 (10.09.2020 Gazette 2020/37)**

(54) **LEVEL CONTROL**

NIVEAUREGELUNG

RÉGULATION DE NIVEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.03.2019   GB 201902905**

(43) Date of publication of application:
**12.01.2022   Bulletin 2022/02**

(73) Proprietor: **BDR Thermea Group B.V.
7332 BD Apeldoorn (NL)**

(72) Inventor: **BRYANT, Simon, Daniel
Preston, Lancashire PR5 6FN (GB)**

(74) Representative: **Dennemeyer & Associates S.A.
Postfach 70 04 25
81304 München (DE)**

(56) References cited:
**JP-A- H07 182 047     US-A- 5 207 251
US-A- 5 705 747**

**Description**

Field of the Invention

The invention relates to a method of controlling the level of a liquid, especially water, in a tank in the face of intermittent liquid removal from said tank. Also, the invention relates to a liquid dispenser comprising a processor configured to implement said method. It particularly relates to liquid dispensers configured to deliver hot or chilled water to end users for use in beverages, or for hand washing.

Background and Prior Art

Water dispensers for providing users with hot water, e.g. for making drinks or hand-washing are well-known. Examples are often used in office kitchens and meeting rooms, and may be wall-mounted and electrically-powered, providing boiling or near-boiling water to make hot drinks when required.

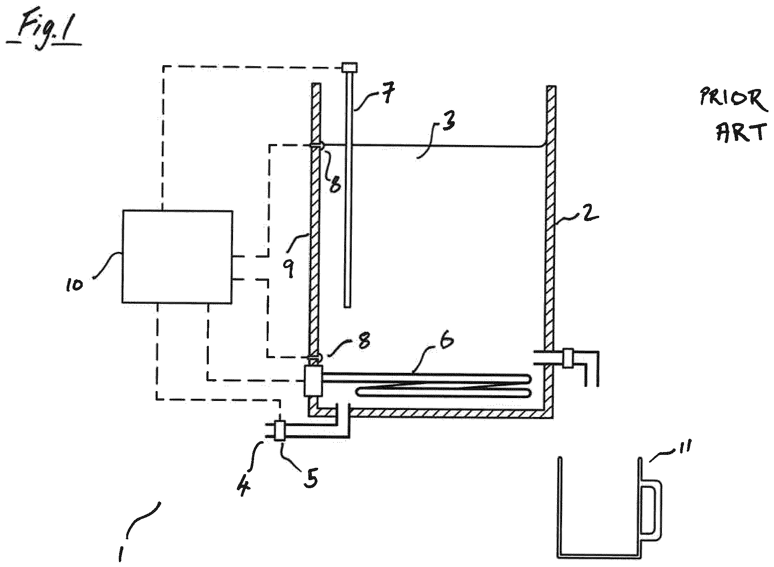

An example of such a system is illustrated in Figure 1, generally indicated by 1. A tank 2 is provided, to hold water 3 that is introduced from e.g. a mains water supply 4 into the bottom of the tank 2, via a solenoid valve 5. Water is heated by an electrical element 6, and the temperature of the water measured with a temperature probe 7.

In its simplest form, measurement of liquid level may be carried out my measuring the electrical resistance between electrically-isolated metal studs 8 located through the side wall 9 of the tank 2 and a reference electrode, e.g. the element 6.

A controller 10 is provided, taking signals from the temperature probe 7 and level-measuring studs 8 and being able to control operation of the element 6 and solenoid filling valve 5.

The absence of water at the top stud indicates that water in the tank need to be replenished, whereupon the controller 10 can open the solenoid valve 5 to introduce more water into the tank.

The absence of water at the bottom stud indicates a failure of the water supply, and the controller can thereby disable to heating element to prevent damage to the system.

A user can thereby draw off water, e.g. into a mug 11, to prepare hot beverages.

The energy consumption of such a device depends on two primary considerations: the unavoidable use of energy to heat the water used by a user, and so-called "standing losses" caused by heat loss to the environment. These standing losses are dependent not only on the temperature difference between the water and the environment, but also on the surface area of the tank in contact with the hot water. As a result, larger tank volumes lead to larger standing losses.

The heat loss could therefore be reduced by using a smaller tank, but this can lead to a situation where insufficient water is available for users when demand is frequent. This can be a particular problem where demand for water increases over the lifetime of the water dispenser, e.g. when the number of people requiring hot drinks increases. In order to be prepared for an increase in hot water demand, it is prudent to select a dispenser with a tank size that will meet future demand, but this goes against the desire to save energy by only having a tank just large enough to meet demand.

It will be appreciated that the same problems exist for water dispensers designed to dispense chilled water, in which the energy requirement is to provide cooling, and the analogous "standing losses" relate to warming of the chilled water by the environment.

It is among the objects of the invention to provide a solution to these problems.

Document US 5,705,747 A describes a method and a system for displaying a level of a liquid contained in a tank, wherein the level of the liquid is measured using a sensing device.

Document US 5,207,251 A describes an automated liquid holding tank and a method for automatically filling a liquid holding tank.

JP H07 182047 A describes a system for controlling the water level of a basin using a water level detector to detect a water head pressure.

Summary of the Invention

Accordingly, the invention provides a method of controlling the level of a liquid in a tank in the face of intermittent liquid removal from said tank, in which said tank has desired minimum and maximum liquid levels $L_{min}$ and $L_{max}$, said method comprising the steps of:

(a) choosing a setpoint level, s; and (b) choosing two monitoring levels, $m_1$ and $m_2$, such that $L_{min}<m_2<m_1<s<L_{max}$; (c) monitoring the level of liquid in the tank and initiating a refill cycle to add liquid to the tank when the level falls below s; (d) periodically reviewing the setpoint level, s, by: (i) determining the lowest level, $L_{low}$, of the liquid over a setpoint review interval; (ii) if $L_{low}<m_2$, then: (A) increasing s by an amount; and (B) optionally increasing $m_1$ and $m_2$ by an amount, whilst maintaining $L_{min}<m_2<m_1<s<L_{max}$; (iii) otherwise if $L_{low}<m_1$ then: (A) maintaining setpoint at s; (iv) otherwise: (A) decreasing s by an amount; and (B) optionally decreasing $m_1$ and $m_2$ by an amount, whilst maintaining $L_{min}<m_2<m_1<s<L_{max}$ s.

In an example, a number, n, discrete liquid levels $L_i$ (where i=1, n) are defined, and where s, $m_1$ and $m_2$ are selected such that $s=L_k$, $m_1=L_{k-i}$ and $m_2=L_{k-2}$ (where k=n, 3).

In another example, the liquid in said tank is intended to be temperature-controlled, and said refill cycle is configured to maintain the temperature of the liquid within a pre-defined operating band around a temperature setpoint.

In another aspect of the invention, a liquid dispenser is provided, the liquid dispenser comprising: a tank for holding liquid; a level sensor for measuring the level of liquid within the tank; a liquid inlet; a liquid outlet, controllable by a user; a processor, configured to receive a signal indicative of the liquid level from said level sensor and to be able to control the flow of liquid into the tank through said liquid inlet; wherein said processor is configured to implement a method described herein.

In one example, said level sensor senses the presence or absence of liquid at a plurality of levels, and said processor is configured to implement a method according to either of Claims 2 or 3.

In another example, any such liquid dispenser further comprises a liquid temperature controller.

Brief Description of the Figures

The invention will be describer with reference to the accompanying drawings, in which:

    Figure 1 illustrates a known water dispenser;

    Figure 2 is a flowchart illustrating a method of controlling liquid level in a water dispenser;

    Figures 3 and 4 illustrate the time course of water level in a tank under control of a control method;

    Figure 5 illustrates a water tank with level sensor;

    Figure 6 illustrates the time course of water level in a tank under control of a control method; and

    Figure 7 illustrates a water dispenser.

Description of Preferred Embodiments

The method will be described with reference to a system for dispensing hot or near-boiling water, but the skilled person will appreciate that the underlying methodology is equally applicable to systems for supplying chilled water, and will be able to adapt the teaching appropriately.

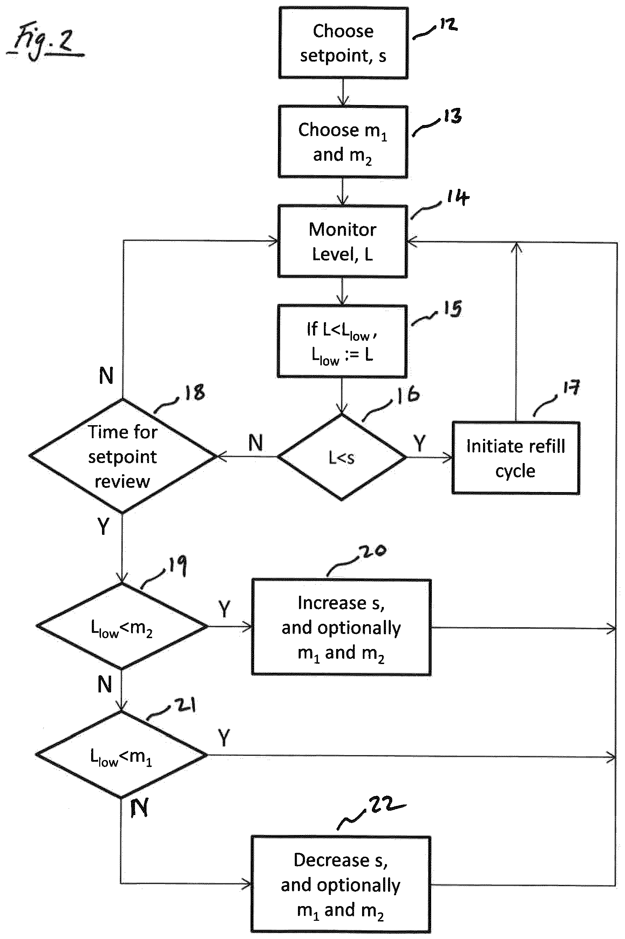

Figure 2 illustrates, in flowchart form, a method of controlling the level of a liquid in a tank of a water dispenser, according to an example. Minimum and maximum water levels $L_{min}$, $L_{max}$ are determined by the geometry of the water tank e.g. $L_{min}$ being a level that ensures that the heating element is always covered with water, and $L_{max}$ being a level that ensures the tank does not overflow.

In a first step, a liquid level setpoint, s, is chosen 12. When a water dispenser is first activated, the initial setpoint might be chosen such that the tank is essentially full, to ensure that sufficient hot (or boiling) water is avail-

able. Two monitoring levels, $m_1$ and $m_2$ are then chosen 13, so that $L_{min}<m_2<m_1<s<L_{max}$. The purpose of the two monitoring levels is to allow the controller to determine the optimum setpoint level for the water dispenser for the prevailing demand for hot water.

In its primary control cycle, a controller measures the level of water, L, in the tank 14. A tally is made of the lowest water level observed since the setpoint s was established. This may be achieved by initialising a data register with a water level $L_{low}$, (e.g. as $L_{max}$) and then updating this value 15 as lower values are measured 15. As part of the control cycle, the measured level L is compared to the setpoint value s 16. If the value is less that the setpoint, a refill cycle can then be initiated 17. In situations where it is desired to maintain the temperature of the water within a particular tolerance of the supply temperature, water may be introduced in small aliquots to prevent the temperature falling outside of the tolerance band, and allow the temperature to recover between aliquots. This level monitoring and control cycle may conveniently be carried out over a short time frame, e.g. measuring the water level every 5-10 seconds.

At periodic intervals, a review of the setpoint is undertaken. Typically, this review might occur on a daily basis, or even weekly, or longer. If a setpoint review is required 18, then the lowest water level, $L_{low}$, recorded over a preceding setpoint review interval is determined. The setpoint review interval need not be the same time period as between setpoint reviews, but would preferably be for a longer preceding interval, such that e.g. a review of the setpoint could be undertaken weekly, but looking at the lowest water level that occurred over the preceding month. In addition, non-operating periods can be specified (e.g. overnight, or at weekends) such that the set point review interval does not include data in which no demand is expected, which could lead to unnecessary changes of setpoint.

The lowest water level during the preceding setpoint review interval, $L_{low}$, is compared against the monitoring levels, $m_1$ and $m_2$. If the water level has dropped below the lower of the two monitoring levels ($m_2$) 19 then the setpoint, s, is increased 20. The amount that the setpoint is increased can be chosen depending on the system being controlled, or the precision to which the energy use is to be optimised. In systems where the water level is only measurable at a discrete number of heights (e.g. by use of multiple conductivity sensors), then the increase in the setpoint can be achieved by increasing it to the next highest available sensor. In situations where the actual height of the water level is not quantised to such a degree, the amount that the setpoint is increased can be chosen by consideration of how variable the water demand is, and how quickly changes in demand are to be tracked. Small changes in setpoint will make the system more immune to erratic demand patterns, but will make the system slower to respond to demand fluctuations.

If the water level has dropped below the higher of the two monitoring levels ($m_1$) but not below the lower level ($m_2$) 21, the setpoint can be left unchanged.

If, however, the water level has not dropped below the upper monitoring level ($m_1$) this is indicative that too much hot water is being stored, and that the setpoint, s, can be reduced 22 in a method analogous to that described for increasing the setpoint.

Following a change in setpoint, the two monitoring levels $m_2$ and $m_2$ can also be adjusted to maintain the relationship of $L_{min} < m_2 < m_1 < s < L_{max}$ having regard to the level sensing available (as described above) and precision to which the energy saving is to be tuned. For example, $m_1$ could be set to 10% below the setpoint, s, and $m_2$ set to 20% below the setpoint.

Before resuming the level control function 14, the register storing the lowest observed liquid level, $L_{low}$ is, of course, reset, e.g. to $L_{max}$.

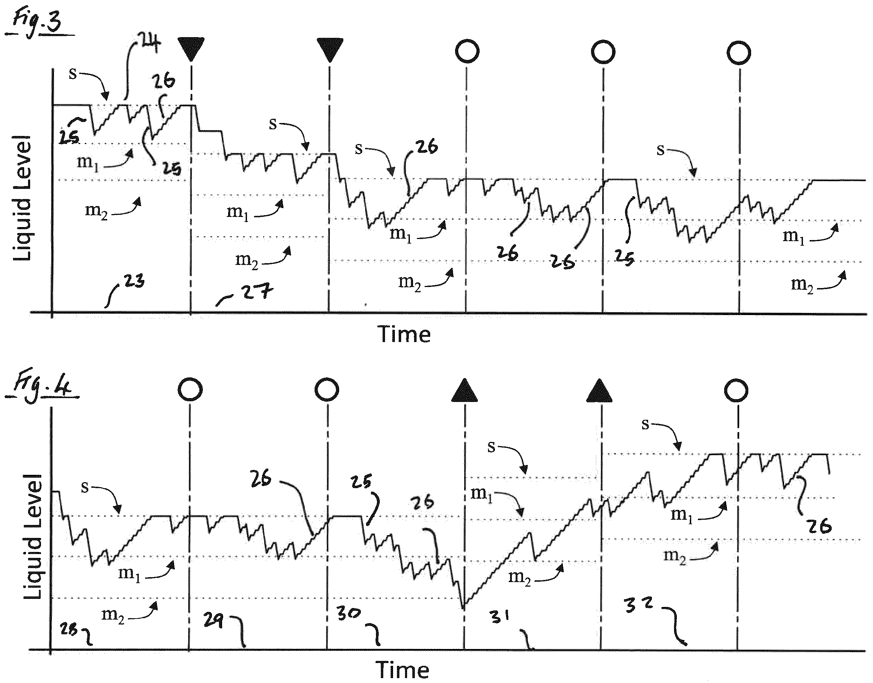

Figure 3 illustrates, graphically, an example of liquid level changes, control, and setpoint review in a water dispenser running a method of level control described herein. For sake of clarity, only a few water demand events are shown, and periods of inactivity (e.g. overnight or at weekends) are omitted. The vertical chain-dash lines indicate the times that setpoint reviews are undertaken. The triangle icons indicate setpoint changes, either down (as in Figure 3) or up (as in Figure 4). The circle icons indicate where a setpoint is left unchanged.

In the first time period 23, it can be seen that the liquid level 24 decreases rapidly on a number of occasions 25 as a result of liquid being drawn from the tank. Subsequently, the liquid level increases again as the tank is refilled. Where the tank is refilled in aliquots in order to maintain the water temperature within a desired range, the increase of liquid level occurs in a stepwise fashion as indicated 26.

At the end of the first time period 23, it can be seen that the liquid level has remained above the upper monitoring level, $m_1$. As a result, the setpoint, s, is reduced, as are the monitoring levels $m_1$ and $m_2$, indicated by the dotted horizontal lines.

During the second time period 27, a similar pattern occurs, with the minimum water level remaining above the upper monitoring level $m_1$. As a result, the setpoint, s, is again reduced, as are the monitoring levels $m_1$ and $m_2$, indicated by the dotted horizontal lines.

During the subsequent time periods, the minimum water level is located between the two monitoring levels, $m_1$ and $m_2$. As a result, no further changes of setpoint or monitoring levels are made.

Figure 4 illustrates, graphically, another example of liquid level changes, control, and setpoint review in a water dispenser running a method of level control described herein. Features are analogous to those illustrated in Figure 3. In the first two time periods 28-29, the minimum water level is located between the upper ($m_1$) and lower ($m_2$) monitoring levels, and so no changes of setpoint or monitoring levels are performed. In both time periods 30 and 31, however, the minimum water level dips below the lower monitoring level, $m_2$, and so at the end of each time period, both the setpoint s and monitoring levels are increased.

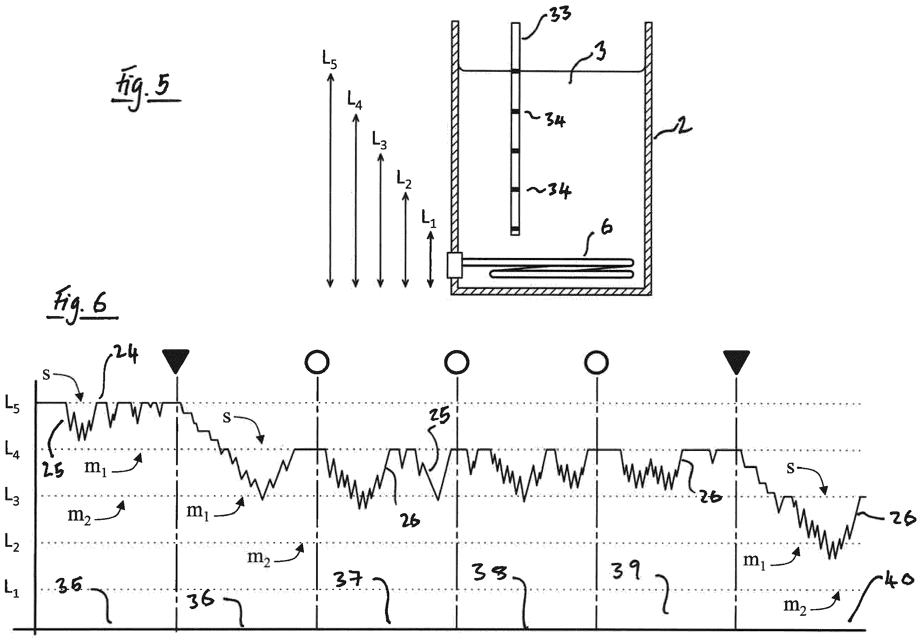

Figure 5 illustrates the tank 2 of a water dispenser analogous to that illustrated in Figure 1. In this system, however, level measurement is carried out by use of level sensor 33 that is equipped with five conductive regions 34. Measurement of the electrical conductivity between each region 34 and a reference electrode such as the heating element 6, allows five discrete water levels $L_1$ - $L_5$ to be detected.

Figure 6 illustrates, in a way analogous to Figures 3 and 4, the changing water level in such a system when controlled by a controller as described herein. Corresponding features are given the same reference numbers. It can be seen that, in each time period 35-40, the set point s, and the two monitoring levels $m_1$ and $m_2$, are each located at one of the discrete levels $L_1$ - $L_5$. The water level line 24 illustrates the actual water level rather than the measured level, as the measurements are, of course, quantized at the levels $L_1$ - $L_5$.

In the first period 35, the minimum water level remains between s and the upper monitoring level $m_1$, and so a setpoint decrease is made by changing s from $L_5$ to $L_4$. At the same time, upper monitoring level is reduced from $L_4$ to $L_3$, and the lower monitoring level is reduced from $L_3$ to $L_2$. During the time periods 37 and 38 the minimum water level is located between $m_1$ and $m_2$, and so no change in setpoint is required. In time period 39, however, the lowest water level is between s and $m_1$, and so a further decrease in setpoint is undertaken by changing s from $L_4$ to $L_3$. At the same time, upper monitoring level is reduced from $L_3$ to $L_2$, and the lower monitoring level is reduced from $L_2$ to $L_1$.

By means of this control methodology, the surface area for heat loss of the water dispenser is reduced, but having regard to the requirement to maintain (as much as possible) an adequate supply of heated water to meet the expected demand pattern.

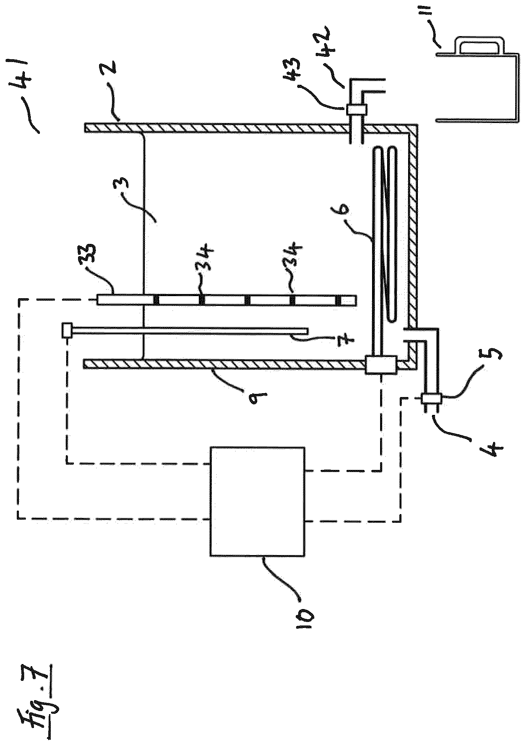

Figure 7 illustrates a liquid level dispenser, generally indicated by 41. Elements common to systems described earlier are numbered correspondingly. The dispenser comprises a tank 2 having a water inlet from a mains supply 4, via a solenoid valve 5. It is also provided with a water outlet 42 operated by a tap 43 that a user can use to deliver water into e.g. a mug 11. The dispenser is provided with a temperature probe 7 and a level sensor 33, or the type that uses conductive regions 34 and in which the electrical conductivity between each region 34 and a reference electrode (e.g. the element 6) is used to infer the water level. A controller 10 is provided that receives signals from the temperature probe 7 and level sensor 33 indicative of the water temperature and level respectively. The controller is also provided with means to actuate the water refill solenoid 5, and to control the operation of the heating element 6. The controller 10 is programmed or otherwise configured to control the level of water in the tank 2 by means of a method described herein.

## Claims

1. A method of controlling the level of a liquid in a tank (2) in the face of intermittent liquid removal from said tank (2), in which said tank (2) has desired minimum and maximum liquid levels $L_{min}$ and $L_{max}$, said method comprising the steps of:

    (a) choosing (12) a setpoint level, s; and
    (b) choosing (13) two monitoring levels, $m_1$ and $m_2$, such that $L_{min}<m_2<m_1<s<L_{max}$;
    (c) monitoring (14) the level of liquid in the tank (2) and initiating (17) a refill cycle to add liquid to the tank (2) when the level falls below s (16);
    (d) periodically reviewing the setpoint level, s, by:

        (i) determining the lowest level, $L_{low}$, of the liquid over a setpoint review interval;
        (ii) if $L_{low}<m_2$ (19), then:

            (A) increasing (20) s by an amount; and
            (B) optionally increasing (20) $m_1$ and $m_2$ by an amount, whilst maintaining

$$L_{min}<m_2<m_1<s<L_{max};$$

        (iii) otherwise if $L_{low}<m_1$ (21) then:

            (A) maintaining setpoint at s;

        (iv) otherwise:

            (A) decreasing (22) s by an amount; and
            (B) optionally decreasing (22) $m_1$ and $m_2$ by an amount, whilst maintaining

$$L_{min}<m_2<m_1<s<L_{max} \text{ s.}$$

2. A method according to Claim 1 in which a number, n, discrete liquid levels $L_1$ (where i=1, n) are defined, and where s, $m_1$ and $m_2$ are selected such that $s=L_k$, $m_1=L_{k-1}$ and $m_2=L_{k-2}$ (where k=n, 3).

3. A method according to either Claim 1 or Claim 2 in which the liquid in said tank (2) is intended to be temperature-controlled, and said refill cycle is configured to maintain the temperature of the liquid within a pre-defined operating band around a temperature setpoint.

4. A liquid dispenser (41) comprising:

    a tank (2) for holding liquid;
    a level sensor (33) for measuring the level of liquid within the tank (2);
    a liquid inlet;
    a liquid outlet (42), controllable by a user;
    a processor, configured to receive a signal indicative of the liquid level from said level sensor (33) and to be able to control the flow of liquid into the tank (2) through said liquid inlet;
    wherein said processor is configured to implement a method according to any of Claims 1 to 3.

5. A liquid dispenser (41) according to Claim 4 where said level sensor (33) senses the presence or absence of liquid at a plurality of levels, and said processor is configured to implement a method according to either of Claims 2 or 3.

6. A liquid dispenser (41) according to either Claim 4 or Claim 5 wherein said dispenser (41) further comprises a liquid temperature controller (10).

## Patentansprüche

1. Verfahren zur Regelung des Niveaus einer Flüssigkeit in einem Tank (2) angesichts einer intermittierenden Flüssigkeitsentnahme aus dem Tank (2), wobei der Tank (2) gewünschte minimale und maximale Flüssigkeitsniveaus $L_{min}$ und $L_{max}$ aufweist, wobei das Verfahren die Schritte umfasst:

    (a) Auswählen (12) eines Niveau-Sollwerts, s; und
    (b) Auswählen (13) von zwei Überwachungsniveaus, $m_1$ und $m_2$, sodass $L_{min}<m_2<m_1<s<L_{max}$ gilt;
    (c) Überwachen (14) des Niveaus der Flüssigkeit im Tank (2) und Auslösen (17) eines Nachfüllzyklus, um dem Tank (2) Flüssigkeit zuzuführen, wenn das Niveau unter s fällt (16);
    (d) periodisches Überprüfen des Niveau-Sollwerts, s, durch:

        (i) Bestimmen des niedrigsten Niveaus, $L_{low}$, der Flüssigkeit über ein Sollwertüberprüfungsintervall;
        (ii) wenn $L_{low}<m_2$ (19), dann:

            (A) Erhöhen (20) von s um einen Betrag; und
            (B) gegebenenfalls Erhöhen (20) von $m_1$ und $m_2$ um einen Betrag, wobei $L_{min}<m_2<m_1<s<L_{max}$ aufrechterhalten wird;

(iii) andernfalls, wenn $L_{low} < m_1$ (21), dann:

(A) Aufrechterhalten des Sollwerts auf s;

(iv) andernfalls:

(A) Reduzieren (22) von s um einen Betrag; und
(B) gegebenenfalls Reduzieren (22) von $m_1$ und $m_2$ um einen Betrag, wobei $L_{min} < m_2 < m_1 < s < L_{max}$ s aufrechterhalten wird.

2. Verfahren nach Anspruch 1, bei dem eine Anzahl n diskreter Flüssigkeitsniveaus $L_i$ (wobei i= 1, n) definiert wird, und wobei s, $m_1$ und $m_2$ so gewählt werden, dass $s = L_k$, $m_1 = L_{k-1}$ und $m_2 = L_{k-2}$ (wobei k=n, 3) gilt.

3. Verfahren nach Anspruch 1 oder Anspruch 2, bei dem die Flüssigkeit in dem Tank (2) temperaturgeregelt werden soll und der Nachfüllzyklus so konfiguriert ist, dass die Temperatur der Flüssigkeit innerhalb eines vordefinierten Betriebsbereichs um einen Temperatursollwert herum aufrechterhalten wird.

4. Flüssigkeitsspender (41), umfassend:

einen Tank (2) zur Aufnahme von Flüssigkeit;
einen Niveausensor (33) zur Messung des Niveaus der Flüssigkeit im Tank (2);
einen Flüssigkeitseinlass;
einen Flüssigkeitsauslass (42), der von einem Benutzer geregelt werden kann;
einen Prozessor, der so konfiguriert ist, dass er ein das Flüssigkeitsniveau anzeigendes Signal von dem Niveausensor (33) empfängt und in der Lage ist, den Flüssigkeitsstrom in den Tank (2) durch den Flüssigkeitseinlass zu regeln;
wobei der Prozessor zum Ausführen des Verfahrens nach einem der Ansprüche 1 bis 3 konfiguriert ist.

5. Flüssigkeitsspender (41) nach Anspruch 4, wobei der Niveausensor (33) das Vorhandensein oder Nichtvorhandensein von Flüssigkeit bei einer Vielzahl von Niveaus erfasst, und der Prozessor so konfiguriert ist, dass er ein Verfahren nach einem der Ansprüche 2 oder 3 ausführt.

6. Flüssigkeitsspender (41) nach Anspruch 4 oder Anspruch 5, wobei der Flüssigkeitsspender (41) ferner einen Flüssigkeitstemperaturregler (10) umfasst.

**Revendications**

1. Procédé de régulation du niveau d'un liquide dans un réservoir (2) dans le contexte d'un retrait intermittent de liquide dudit réservoir (2), dans lequel ledit réservoir (2) présente des niveaux de liquide minimal et maximal souhaités $L_{min}$ et $L_{max}$, ledit procédé comprenant les étapes consistant à :

(a) sélectionner (12) un niveau de consigne, s ; et
(b) sélectionner (13) deux niveaux de surveillance, $m_1$ et $m_2$, de sorte que $L_{min} < m_2 < m_1 < s < L_{max}$ ;
(c) surveiller (14) le niveau de liquide dans le réservoir (2) et amorcer (17) un cycle de re-remplissage pour ajouter du liquide dans le réservoir (2) lorsque le niveau chute en dessous de s (16) ;
(d) examiner périodiquement le niveau de consigne, s :

(i) en déterminant le niveau le plus bas, $L_{bas}$, du liquide sur l'intervalle d'examen de consigne ;
(ii) si $L_{bas} < m_2$ (19), alors :

(A) en diminuant (20) s d'une certaine quantité ; et
(B) éventuellement en augmentant (20) $m_1$ et $m_2$ d'une certaine quantité, tout en conservant $L_{min} < m_2 < m_1 < s < L_{max}$ ;

(iii) sinon si $L_{bas} < m_1$ (21) alors :

(A) en maintenant la consigne à s ;

(iv) sinon :

(A) en diminuant (22) s d'une certaine quantité ; et
(B) éventuellement en diminuant (22) $m_1$ et $m_2$ d'une certaine quantité, tout en maintenant $L_{min} < m_2 < m_1 < s < L_{max}$ s.

2. Procédé selon la revendication 1 dans lequel un nombre, n, des niveaux de liquide discrets $L_i$ (où i=1, n) sont définis, et où s, $m_1$ et $m_2$ sont choisis de sorte que $s = L_k$, $m_1 = L_{k-i}$ et $m_2 = L_{k-2}$ (où k=n, 3).

3. Procédé selon la revendication 1 ou la revendication 2, dans lequel le liquide dans ledit réservoir (2) est destiné à être régulé en température et ledit cycle de re-remplissage est conçu pour maintenir la température du liquide dans une fourchette de fonctionnement prédéfinie autour d'une consigne de température.

**EP 3 935 467 B1**

4. Distributeur de liquide (41) comprenant :

   un réservoir (2) destiné à contenir un liquide ;
   un capteur de niveau (33) destiné à mesurer le niveau de liquide dans le réservoir (2) ;
   une entrée de liquide ;
   une sortie de liquide (42), régulable par un utilisateur ;
   un processeur, configuré pour recevoir un signal indiquant le niveau de liquide provenant dudit capteur de niveau (33) et pour permettre de réguler le débit de liquide dans le réservoir (2) à travers ladite entrée de liquide ;
   ledit processeur étant configuré pour mettre en œuvre un procédé selon l'une quelconque des revendications 1 à 3.

5. Distributeur de liquide (41) selon la revendication 4, dans lequel ledit capteur de niveau (33) détecte la présence ou l'absence d'un liquide à une pluralité de niveaux, et ledit processeur est configuré pour mettre en œuvre un procédé selon l'une quelconque des revendications 2 ou 3.

6. Distributeur de liquide (41) selon la revendication 4 ou la revendication 5, dans lequel ledit distributeur (41) comprend en outre un dispositif de régulation (10) de température de liquide.

_Fig.1_

EP 3 935 467 B1

Fig.2

Choose setpoint, s — 12

Choose $m_1$ and $m_2$ — 13

Monitor Level, L — 14

If $L < L_{low}$, $L_{low} := L$ — 15

Time for setpoint review — 18

$L < s$ — 16

Initiate refill cycle — 17

$L_{low} < m_2$ — 19

Increase s, and optionally $m_1$ and $m_2$ — 20

$L_{low} < m_1$ — 21

Decrease s, and optionally $m_1$ and $m_2$ — 22

EP 3 935 467 B1

Fig.3

Liquid Level

Time

Fig.4

Liquid Level

Time

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5705747 A
- US 5207251 A

- JP H07182047 A